# EUROPEAN PATENT SPECIFICATION

(11) **EP 2 349 886 B1**
(45) Date of publication and mention of the grant of the patent: **17.07.2013**
(21) Application number: 09755897.7
(22) Date of filing: 17.11.2009
(51) Int. Cl.: B65G 57/00, B65G 1/00

(54) **DEVICE FOR SEPARATING A PALLET FROM THE RESPECTIVE LOAD**
VORRICHTUNG ZUR TRENNUNG EINER PALETTE VON DER JEWEILIGEN LAST
DISPOSITIF POUR SÉPARER UNE PALETTE DE LA CHARGE RESPECTIVE

(30) Priority: 18.11.2008 IT BO20080696
(43) Date of publication of application: 03.08.2011
(73) Proprietor: Toppy S.R.L., 40053 Bazzano (BO) (IT)
(72) Inventor: PIANI, Daniele, I-40050 Monte San Pietro (Bologna) (IT)
(74) Representative: Negrini, Elena
(86) International application number: PCT/EP2009/065344
(87) International publication number: WO 2010/057898

(56) References cited:
- EP-A1- 1 369 361
- GB-A- 957 236
- US-A- 5 102 282
- US-B1- 6 851 912

## Description

### TECHNICAL FIELD

The present invention concerns packages and parcel preparation and refers to a device for separating a pallet from the respective load for example for replacing the pallet with another.

### BACKGROUD OF THE INVENTION

The pallets are loaded of parcels, products or packs for facilitating their movement or storage. The pallets, of various sizes and standard, can be of different quality, materials and costs and it is often necessary to transfer the load, for example consisting of boxes or packs, from a pallet to another, for example to replace a robust and expensive cargo pallet with a most economical pallet for storing.

Generally the transfer occurs shifting manually the load boxes from a pallet to another.

Each document US6851912 and EP1369361 discloses a device for separating a pallet, which support plane is got cross from a plurality of grooves, from the respective load. Said device comprising:
- a platform means for supporting the pallet with the load;
- a plurality of rod means provided with respective points and insertable in the grooves, said rod means being vertically movable between a lower feeding condition with the load an outlet upper condition;
- translation means able to carry out a relative translation between the plurality of rod means and the pallet with the load;
wherein, in the operating condition, the pallet with the load is placed on the platform means with the pallet directed so that the rod means are aligned to the grooves of the support plane of the same pallet, the translation means translate in mutual approaching the pallet and the rod means until the complete insertion of these last in the grooves; the rod means lifts the load, detaching thereby the pallet from the respective load.

EP 136 361 discloses a device for separating a pallet according to the preamble of claim 1.

### DISCLOSURE OF THE INVENTION

A purpose of this invention is to propose a device for separating a pallet from the respective load.

Another purpose is to propose a device fit to carry out this separation in an automatic or semiautomatic way and fit to preserve the pallet integrity.

Another purpose is to propose a device that can also change the pallet putting the load onto a different pallet.

The purposes of the invention are achieved by the device of claim 1.

Some types of pallet, for example the standard pallet EUR - EPAL (800mm X 1200mm or 1000mm X 1200mm) have the load carrying plane interrupted by four longitudinal grooves.

In the easier embodiment of the device, the pallet to be replaced, with its load, is placed above a platform means of the device where a plurality of rod means is inserted into the grooves of the support plane of the pallet between the pallet itself and its load. The platform means is movable vertically and its lowering allows the platform descent while the load remains supported by the rod means carrying out the separation. Here it is possible to replace the original pallet on the platform means with another placed in the same position and to put thereon the load by raising the platform means up to the rod means take place in the grooves of the new pallet which thus supports the load allowing to take them off from the rod means. Now it is possible to move the new pallet carrying the load and to place another pallet with its load onto this platform means to start a new procedure.

### BRIEF DESCRIPTION OF THE DRAWINGS

The characteristics of the invention are in the following illustrated with particular reference to the enclosed drawings in which:

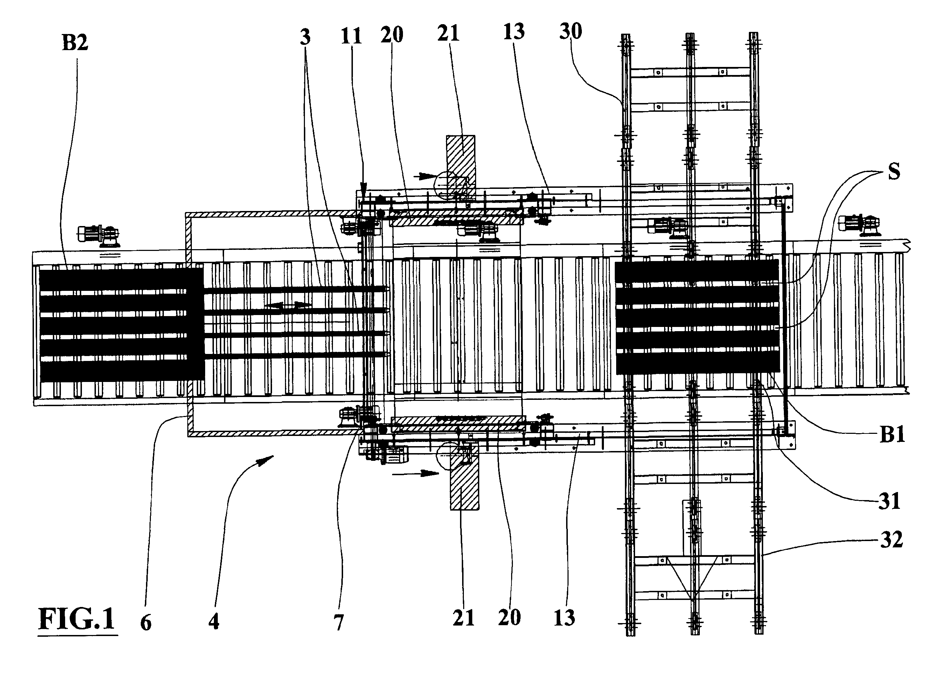

- figure 1 shows a top partial view of the device, object of the present invention, for separating a pallet from the respective load where this device is associated to feeding means for a pallet to be replaced and carrying a load and for a substitutive pallet;

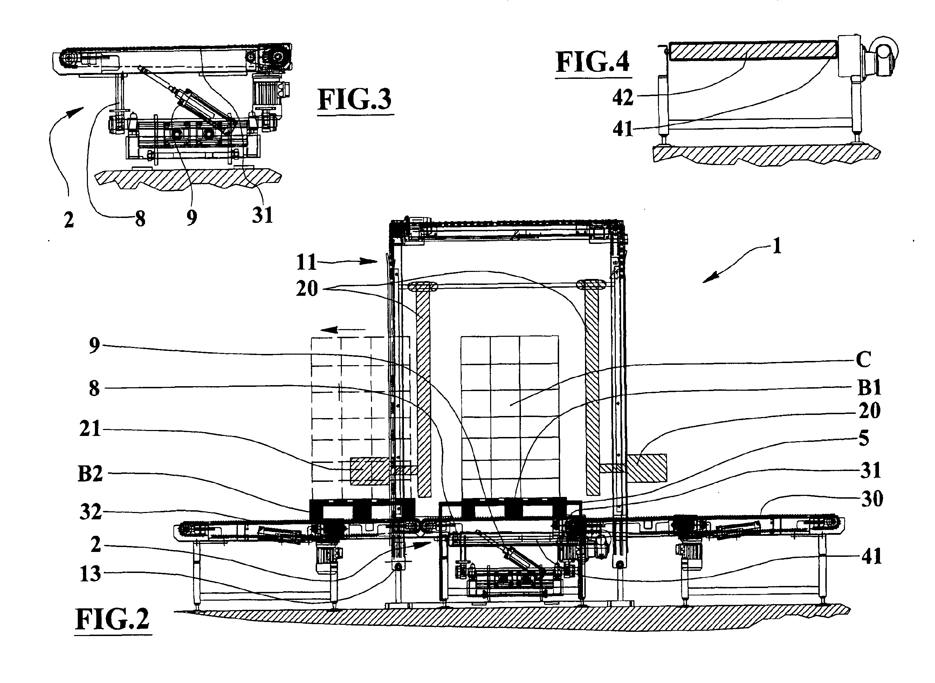

- figure 2 shows a side-view of the device of figure 1 in which one of its platform means is in an upper condition of feeding of the pallet to be replaced and carrying a load;
- figure 3 shows an out of scale side-view of the platform means of figure 2;
- figure 4 shows an out of scale side-view of one of the feeding means of the device of figure 1;

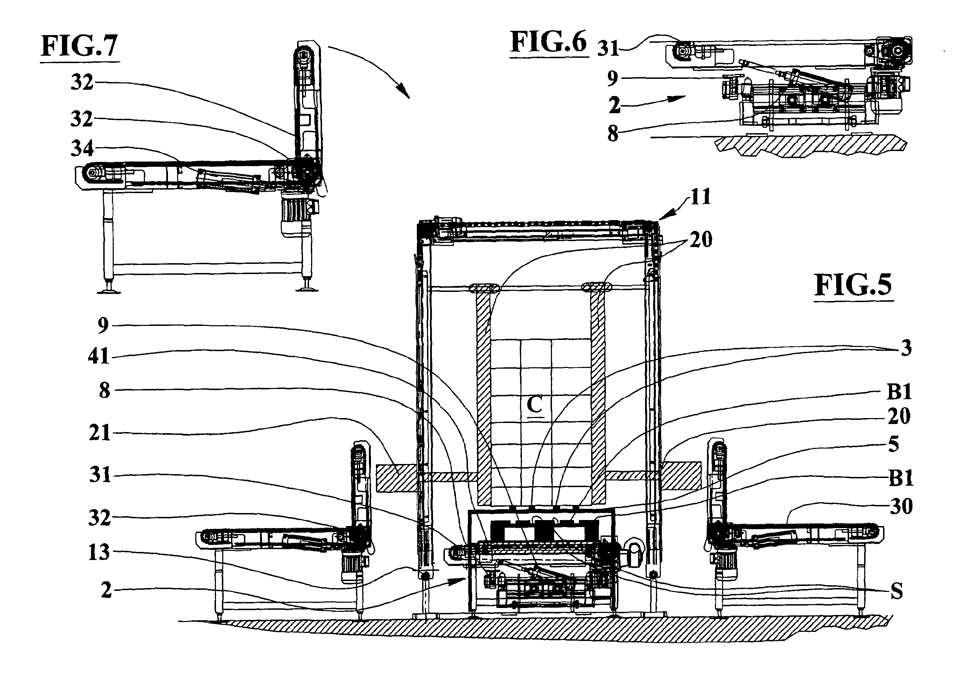

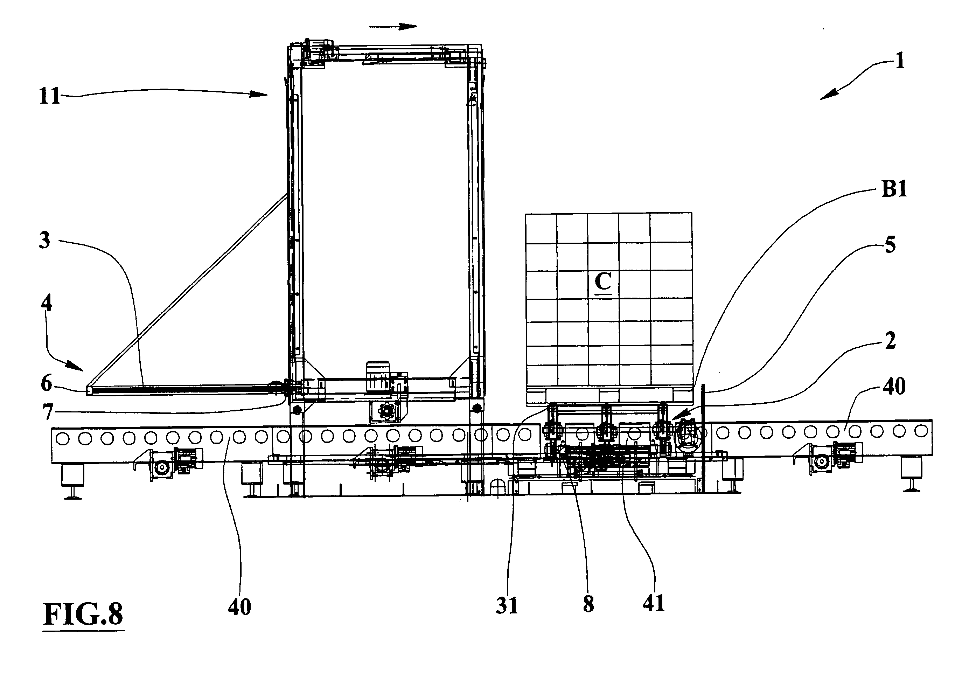

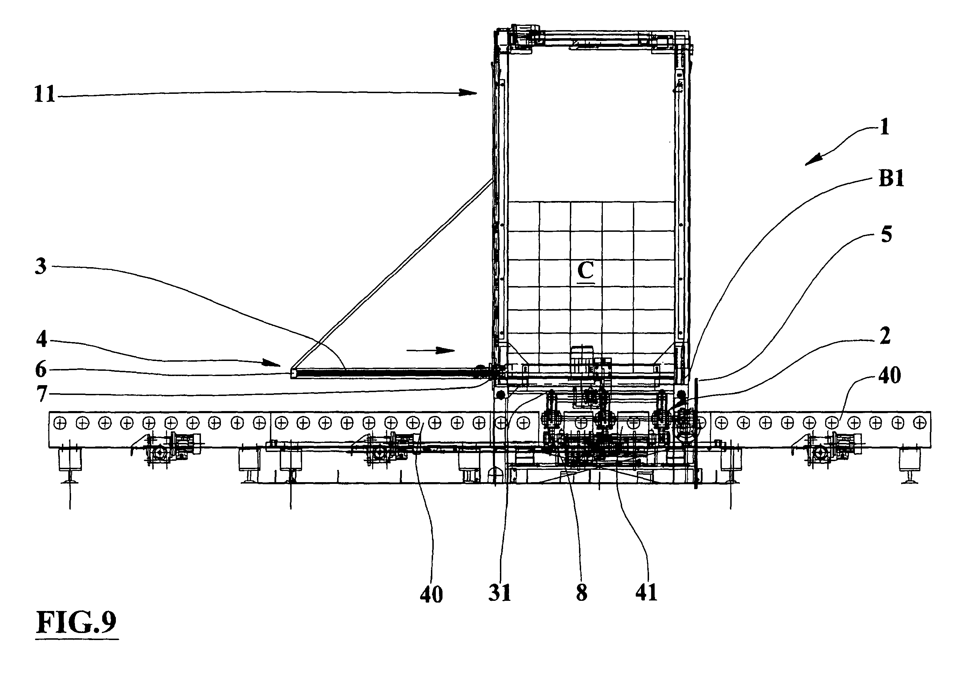

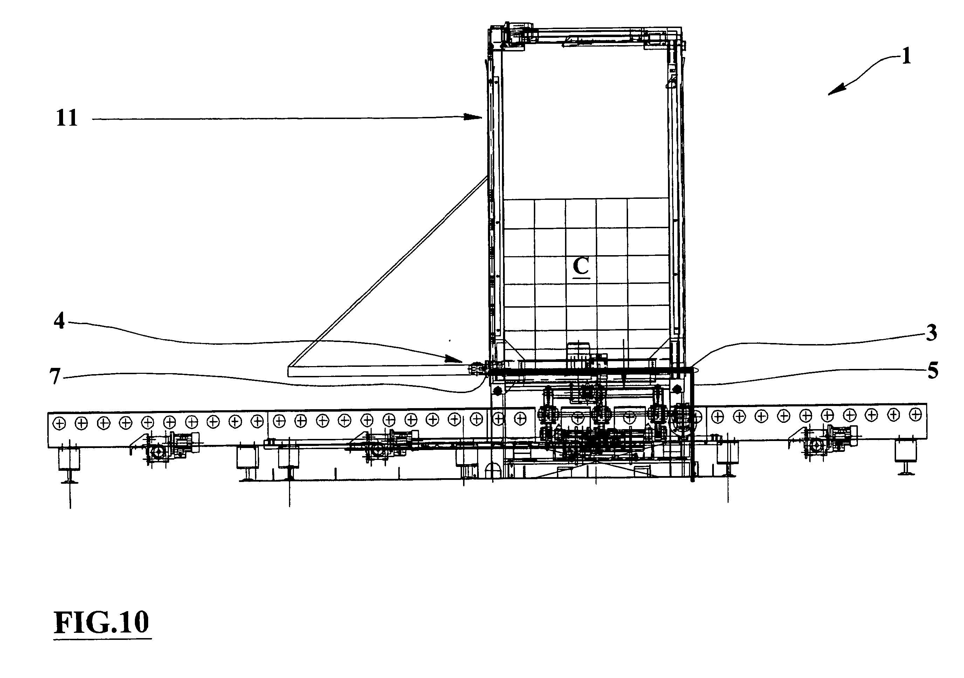

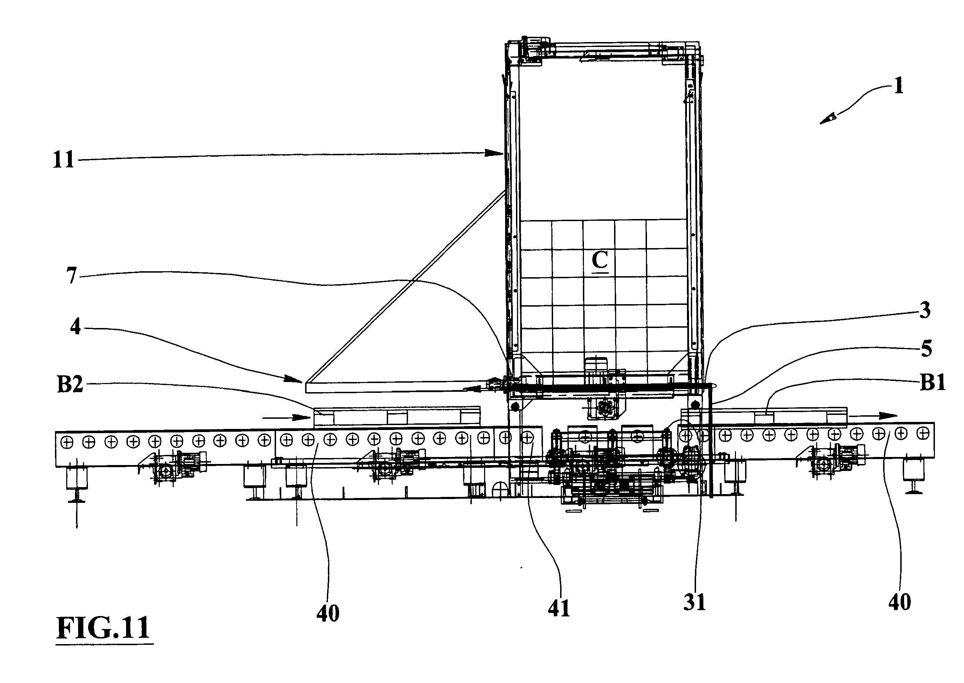

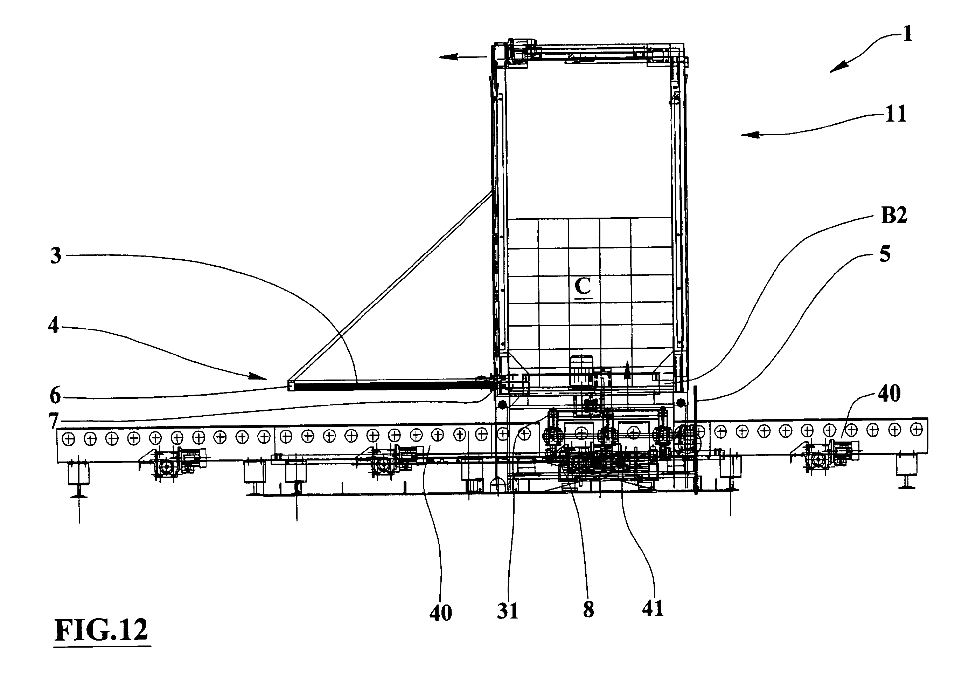

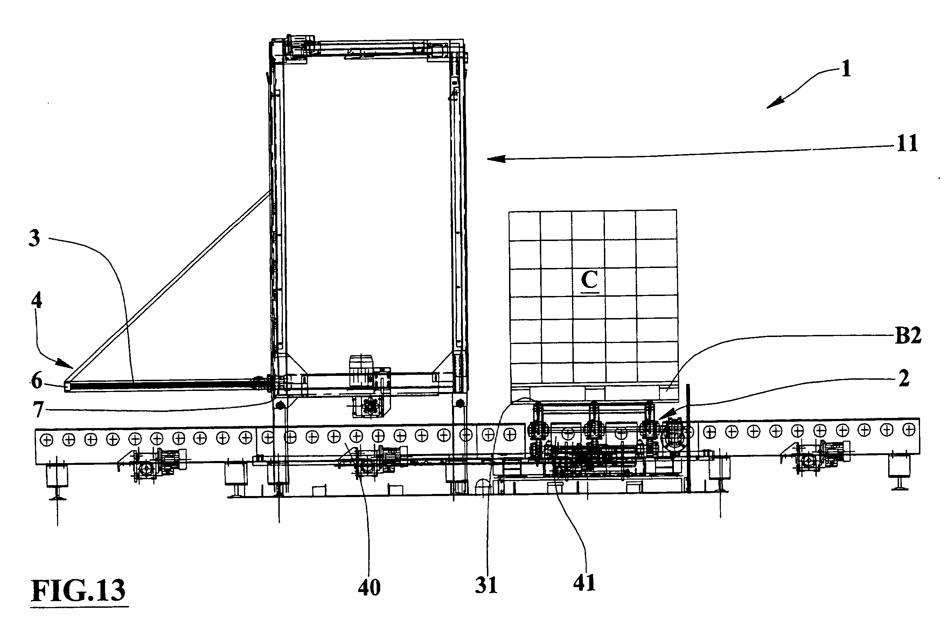

- figure 5 shows a side-view of the device of figure 1 in which one of its platform means is in an exit lowered condition of the separate pallet;
- figure 6 shows an out of scale side-view of the platform means of figure 2;
- figure 7 shows an out of scale side-view of a portion of one of the feeding means of the device of figure 1 in an interruption condition;
- figures from 8 to 13 show frontal views of the device of figure 1 in following operating phases;

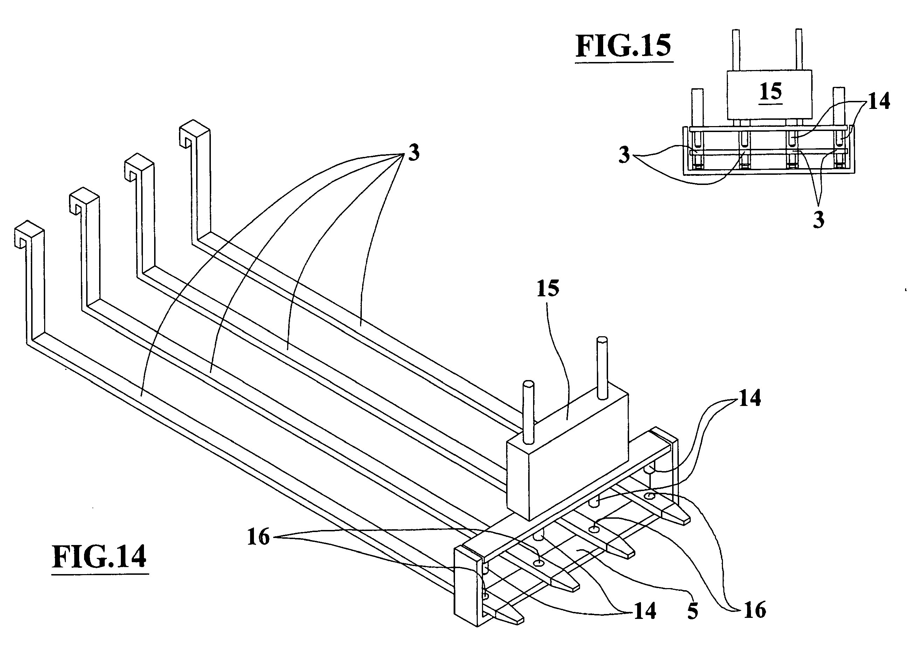

- figure 14 shows a schematic and axonometric view of a variant of the rod means of figure 1 associated to a middle locking means of their tips;
- figure 15 shows a side-view of the elements of figure 14.

### BEST MODE OF CARRYING OUT THE INVENTION

With reference to figures from 1 to 14, numeral 1 indicates the device, object of the present invention, for separating a pallet or a platform B1, for example standard EUR - EPAL with base of 800 mm for 1.200 mm, from its load C, for example, made of boxes, receptacles or packs.

The load carrying plane of the pallet B1 is completely crossed by a plurality of grooves S parallel to a side of the pallet, for example in the pallet EUR the grooves are four, parallel to the longer side of the pallet and formed by spaces between the tables that form the load carrying plane.

The device 1 includes a platform means 2 that, in an operative condition of the device 1, is almost horizontal. The platform means 2 is vertically movable and is actuated, for example, by a vertical translation actuator 9 that controls the translation along an array of vertical translation guides 8, between an upper condition, in which the platform means 2 is supplied with the pallet B1 carrying the load C, and a lowered condition, in which the pallet B1, without the load, can be taken.

The device 1 includes also a plurality of rod means 3, equipped with own bevelled tip and insertable into the grooves, below the load C.

The rod means 3 are aligned to their own grooves, and are preferably made of steel AISI 5592 or others with similar yield limits, have transverse sizes and reciprocal positioning corresponding to those of the grooves of the carrying plane of the pallet B1 itself and have length slightly longer than such grooves S; in this way when the rod means are completely inserted into the grooves from a side of the platform, the tips protrude at the opposite side. The rod means 3 are supported in a projection way by a fixing means 6 with which form a kind of fork with two or more tines represented by the rod means themselves which, in the case illustrated in the pallet figures, are in number of four.

The fixing means 6 can be made by a kind of plate or horizontal beam and perpendicular to the rod means and destined to support, preferably in order to allow the transverse adjustment, the ends of the rod means opposite to the tips. The device 1 also includes translation means 4 provided with first translation actuator means 7, for example of linear actuator or rack type engaged into pinions rotated by a shaft put into rotation by a gear-motor, fit to carry out a relative translation between the plurality of rod means 3, sustained by the fixing means 6, and the pallet B1 with the load C placed on the platform means 2. Preferably, as shown, the platform means is fixed in an horizontal position and the first actuator means 7 of translation of the translation means 4 moves the rod means along the respective longitudinal axes. The device can be equipped with optional sliding supporting means, illustrated in dashed line, intended to support the weight of the fixing means 6 and of the rod means in their removal condition from the platform means 2.

In the operative condition of this minimum configuration for the manual control of the device, the pallet B1 with its load C is placed, for example by means of a transpallet or a lifter trolley, onto the platform means 2 in the respective upper feeding condition. The pallet B1 is placed, for example by means of matches or stops, so that the grooves of the carrying plane of the pallet B1 itself are aligned to the rod 3 means. The activation of the translation means 4 moves the rod means 3, supported by the fixing means 6, inserting themselves into the grooves below the load C.

The activation of the actuator of vertical translation 9 causes the lowering of the platform means 2 and of the pallet B1 that is so separated from the load that remains held up by the rods 3. In the so reached condition, it is possible to take manually the pallet B1 from the platform means where can be placed another pallet B2 substitutive or another support having grooves of the carrying plane fit to accommodate the rod 3 means and exactly placed under such rod means. An opposite activation of the actuator of vertical translation raises the substitutive pallet B2 until its carrying plane matches with the load base and its grooves are engaged by the rod means which may be moved away and removed by means of an activation of the translation means 4 in direction opposite to that of the previous activation. In this phase the load is carried by the substitutive pallet B2 and is withdrawable while the original platform B1 is discharge and available.

In case of heavy loads, the device 1 can be provided of supporting means 5 matching with the lower faces of the tips, protruding from the pallet B1, the rod means supporting them when these latter are completely inserted into the grooves S and for reducing the arrow when the platform means 2 sends-away and separates the support platform B1.

In a most complex embodiment of the device 1, the platform means 2 can be provided with position sensors and hidden stops for the correct positioning of the pallet B1 with the load C on the same platform means 2.

This embodiment of the device 1 includes lateral presser means 20, for example constituted of flat walls, almost parallel to the rod means 3 placed at the sides of these latter 3 and, in the operative condition, almost vertical. Such lateral presser means 20 are operated in reciprocal approaching and sending-apart from respective operating means 21, preferably of pneumatic type of adjustable pressure type, for clamping sideways, with adjustable force, the load C during the lowering of the platform means 2 and the separation from the pallet B1 avoiding that the parcels of the load may move away reciprocally.

This embodiment of the device 1, for the automatic or semi-automatic operation of the device includes a plurality of first transport means 30, 31, 32, preferably of chain type, almost horizontal and perpendicular to the rod means 3, the first transport means 31 interposed between the two sides 30, 32 constitutes the support base of the platform means 2. The first side transport means 30, 32 are aligned and contiguous at opposite ends of the first transport mean 31 of the platform mean 2 in the upper condition of the platform mean 2, to feed it with the pallet B1 with the load C and to release the load C supported by a substitutive pallet B2.

The device 1 includes also a movable trolley 11 moved by respective motor means along rail means 13 almost parallel to the rod means 3. The movable trolley means 11 is shaped as portal and supports the fixing means 6 for the rod means 3 that moves approaching and removing with respect to the platform means 2. The movable trolley means 11 supports also the side presser means 20 and the respective operating means 21.

The portions of the first side transport means 30, 32 contiguous to the first transport means 31 of the platform means 2 are liftable, for example by rotating around a respective pin 33 and by a respective actuator 34 to allow the passage of the movable trolley means 11 and the approaching of the side presser means 20 to the respective sides of the load C.

The device 1 includes also a set of second transport means 40, 41, for example of the type of roller device, and parallel to the rod means 3 and therefore orthogonal to the first side transport means 30 32 with respect thereof they are lower. The second transport means 40, 41 are facing the platform means 2 and are slightly higher than this platform means 2 in the respective lower condition, to feed the corresponding support base, consisting of the first transport means 31, with a substitutive platform B2, intended to support the load C, and to release the replaced pallet B1. The intermediate portion 41 of the second transport means 40, 41, crossing the first transport means 31 which constitutes the support base of the platform means 2, has interruptions for the passage of this first transport means 31 slightly below of this intermediate portion 41 and is equipped with one or more power-operated rollers 42 for releasing the original platform B1.

The supporting means 5 are transverse and higher with respect to the second transport means 40, 41 and have a lower opening sufficient for the passage of the pallet B1 along such second transport means 40, 41.

The operation of this embodiment of the device 1 provides that, in a maximum removal condition of the movable trolley means 11 from the platform means, the first transport means 30, 31 can be aligned for feeding the pallet B1 with the load C to the plane of the platform means, following a rotation of the end portions of the first side transport means 30, 32, the movable trolley means can be approached to platform means up to the side presser means 20 are adjacent to the load C and the rod means are next to grooves. In this condition the side presser means 20 can match the side faces of the load and the rod means can be put into the grooves until the tips match the supporting means 5. The activation of the vertical translation actuator 9 causes the lowering of the platform means until its support plane, consisting of the intermediate first transport means 31, lowers below the second transport means 40, 41 which receive the original pallet B1 so releasing it. The second transport means 40, 41 carry a substitutive pallet B2 on the support plane consisting of the first transport means31 that, following the lifting of the platform means 2, makes this pallet B2 matching with the load bottom. The rod means are removed from the grooves of the substitutive pallet B1, the lateral presser means 20 are moved away from the load, the movable trolley means 11 is moved away from the platform means and the movable portions of the first side transport means30 32 are rotated aligning them to the first side transport means 30 32 that can release the substitutive pallet B2 with the load and can feed a new load supported by a pallet B1 to be replaced.

In case of very heavy loads, the device can be provided with a number of pin means 14 equal to the number of the rod means and engaged to translate vertically above of the supporting means 5. The pin means 14 can be fixed to the lower face of a horizontal shelf means operated by respective actuator means 15, for example of pneumatic linear type or preferably of hydraulic type.

Each rod means is equipped with a respective seat 16 consisting for example of a hole in proximity of its tip in the zone that is supported by the supporting means 5.

When the end of the rod means are supported by the supporting means 5, the activation of the actuator means 15 of the shelf means causes the insertion of the pin means 14 into the seats 16 of the rod means.

Optionally the seats 16 can be passing through and the supporting means 5 can be equipped with holes aligned to those of said seats 16 and intended to reversibly house the ends of the pin means 14 to improve the locking of the ends of the rod means.

An advantage of this invention is to supply a device for separating a pallet from the respective load.

Other advantage is to supply a device fit to carry out this separation in an automatic or semi- automatic way and fit to preserve the integrity of the pallets.

Further advantage is to supply a device fit also to replace the pallet putting the load onto a different pallet.

## Claims

1. Device for separating a pallet (B1), whose support plane is crossed by a plurality of grooves (S), from the respective load (C); said device comprises at least:
- a platform means (2) which, in an operating condition of the device (1), is vertically movable between an upper feeding condition of the pallet (B1) with the load (C) and an exit lower condition;
- a plurality of rod means (3) provided with respective tips and insertable into the grooves (S);
- translation means (4) fit to carry out a relative translation between the plurality of rod means (3) and the pallet (B1) with the load (C);
in the operating condition, in which the pallet (B1) with the load (C) is placed on the platform means (2) in the respective upper feeding condition with the pallet (B1) directed so that the rod means (3) are aligned to the grooves (S) of the support plane of the same pallet (B1), the translation means (4) translate in mutual approaching the pallet (B1) and the rod means (3) until the complete insertion of these latter into the grooves (S); the platform means (2) lowers detaching the pallet (B1) from the respective load (C) which is supported by the rod means (3); the translation means (4) including a fixing means (6) for the overhanging support of the ends of rod means (3) opposite to the tips and first actuator means for translating said fixing means (6) in a direction parallel to the rod means (3); the device (1) further comprises a movable trolley means (11) moved by respective motor means along rail means (13) and having the fixing means (6) for the rod means (3) that move approaching and removing with respect to the platform means (2), the device (1) being **characterized in that** the rail means (13) are almost parallel to the rad means (3)

2. Device according to claim 1 **characterised in that** the rod means (3) preferably made of steel AISI 5592 or other materials with similar yield limits, have transverse sizes and reciprocal positioning corresponding to those of the grooves (S) of the support plane of the pallet (B1) itself and have length at least slightly longer than the one of such grooves(s); and **in that** the device (1) comprises support means (5) matching the lower faces of the rod means (3) portions close to the tips and protruding outside the pallet (B1), for supporting them when these latter are inserted completely into the grooves (S).

3. Device according to claim 1 **characterised in that** the platform means (2) has at least a support plane for the pallet (B1) with the load (C) provided with at least a vertical translation guide (8) and with at least a vertical translation actuator (9) for its vertical translation and provided with position sensors and hidden stops for the correct positioning of the pallet (B1) with the load (C).

4. Device according to claim 1 **characterised in that** it comprises lateral presser means (20) almost parallel to the rod means (3) placed besides these latter (3) and, in operating condition, almost vertical; such lateral presser means (20) being actuated in reciprocal approaching and removing by respective operating means (21) for locking the load (C) during the lowering of platform means (2), and the departing from the pallet (B1).

5. Device according to claim 3 **characterised in that** it comprises a plurality of first transport means (30, 31, 32) perpendicular to the rod means (3), one of which (31) is the support plane of platform means (2) and two of which (30, 32) are aligned and contiguous to opposite ends of the first transport means (31) of the platform means (2) in the upper condition of these platform means (2) to feed it with the pallet (B1) with the load (C) and to evacuate the load (C) supported by a substitutive platform (B2).

6. Device according to the claim 4 **characterised in that** the lateral presser means (20) and the respective operating means (21) are supported by the movable trolley means (11).

7. Device according to claims 5 and 6 **characterised in that** portions of the first transport means (30, 32) which are lateral and contiguous to the first transport means (31) of the platform means (2) are liftable, for example by rotation around a respective pin (33) and by effect of a respective actuator (34), to allow the passage of the movable trolley means (11) and the approaching of the lateral presser means (20) to the respective sides of the load (C).

8. Device according to claim 5 **characterised in that** it comprises a plurality of second transport means (40, 41) parallel to the rod means (3), directed towards the platform means (2) and slightly higher than these platform means in the respective lower condition, for feeding it with a substitutive pallet (B2), used to support the load (C), and to evacuate the replaced pallet (B1); an intermediate portion (41) of the second transport means (40, 41) which crosses the first transport means (31) of the platform means (2) having interruptions for the passage of such first transport means (31) slightly underneath of such intermediate portion (41).

9. Device according to claims 2 and 8 **characterised in that** the support means (5) are transverse and higher as regards to the second transport means (40, 41) and have a lower opening suitable for the passage of the pallet (B1) along such second transport means (40, 41).

10. Device according to claim 2 **characterised in that** it comprises a plurality of pin means (14) bounded to translate vertically above the support means (5) and actuated by the respective actuator means (15) to engage reversibly respective seats (16) each obtained near the tip of a respective rod means (3) supported by said support means (5).

## Patentansprüche

1. Vorrichtung zur Trennung einer Palette (B1), deren Tragfläche mit einer Vielzahl von Schlitzen (S) durchsetzt ist, von der jeweiligen Last (C); wobei die Vorrichtung mindestens aufweist:
• ein Plattform-Mittel (2), welches in einem Betriebszustand der Vorrichtung (1) zwischen einem oberen Beschickungszustand der Palette (B1) mit der Last (C) und einem unteren Ausgabezustand senkrecht bewegbar ist;
• eine Vielzahl von Stangenmitteln (3), die mit jeweiligen Spitzen versehen und in die Schlitze (S) einsetzbar sind;
• Verfahrmittel (4), die dazu angepasst sind, eine relative Verschiebung zwischen der Vielzahl von Stangenmitteln (3) und der Palette (B1) mit der Last (C) durchzuführen; wobei in dem Betriebszustand, in welchem die Palette (B1) mit der Last (C) in dem jeweiligen oberen Beschickungszustand auf das Plattform-Mittel gesetzt ist und wobei die Palette (B1) so ausgerichtet ist, dass die Stangenmittel (3) mit den Schlitzen (S) der Tragfläche der gleichen Palette (B1) fluchten, die Verfahrmittel (4) sich in wechselseitiger Annäherung der Palette (B1) und der Stangenmittel (3) bis zur vollständigen Einsetzung dieser letzteren in die Schlitze (S) verschieben; das Plattform-Mittel (2) sich senkt, unter Lösung der Palette (B1) von der jeweiligen Last (C), welche von den Stangenmitteln (3) getragen wird; wobei die Verfahrmittel (4) ein Fixiermittel (6) für den überhängenden Träger der Enden der Stangenmittel (3) entgegengesetzt zu den Spitzen beinhalten, sowie erste Betätigungsmittel zum Verfahren der Fixiermittel (6) in einer Richtung parallel zu den Stangenmitteln (3); die Vorrichtung ferner ein bewegliches Laufkatzenmittel (11) aufweist, das durch jeweilige Motormittel entlang von Schienenmitteln (13) bewegt wird und welches die Fixiermittel (6) für die Stangenmittel (3) aufweist, die sich in Bezug auf das Plattform-Mittel (2) annähernd und entfernend bewegen, wobei die Vorrichtung (1) **dadurch gekennzeichnet ist, dass** die Schienenmittel (13) beinahe parallel zu den Stangenmitteln (3) verlaufen.

2. Vorrichtung gemäß Anspruch 1, **dadurch gekennzeichnet dass** die Stangenmittel (3) vorzugsweise aus Stahl nach AISI 5592 oder anderen Materialien mit ähnlichen Streckgrenzen gefertigt sind, Querdimensionen und wechselseitige Positionierung entsprechend denjenigen der Schlitze (S) der Tragfläche der Palette (B1) selbst aufweisen und eine Länge mindestens etwas länger als der eine von solchen Schlitzen (S) haben; und dadurch, dass die Vorrichtung (1) Tragmittel (5) aufweist, welche zu den unteren Flächen derjenigen Abschnitte der Stangenmittel (3) passen, die nahe den Spitzen und außerhalb der Palette (B1) vorstehend sind, um diese zu stützen wenn diese letzteren vollständig in die Schlitze (S) eingesetzt sind.

3. Vorrichtung gemäß Anspruch 1, **dadurch gekennzeichnet dass** das Plattform-Mittel (2) mindestens eine Tragfläche für die Palette (B1) mit der Last (C) hat, die mit mindestens einer senkrechten Verschiebungsführung (8) und mit mindestens einer Verfahr-Betätigungseinrichtung (9) für ihr senkrechtes Verfahren versehen ist und mit Lagesensoren und verborgenen Anschlägen für die korrekte Positionierung der Palette (B1) mit der Last (C) versehen ist.

4. Vorrichtung gemäß Anspruch 1, **dadurch gekennzeichnet dass** sie seitliche Andrückmittel (20) umfasst, die beinahe parallel zu den Stangenmitteln (3) und neben diesen letzteren befindlich und im Betriebszustand beinahe senkrecht sind; wobei diese seitlichen Andrückmittel (20) bei der wechselseitigen Annäherung und Entfernung durch jeweilige Betriebsmittel (21) zum Feststellen der Last (C) während des Absenkens der Plattform-Mittel (2) und des Ausfahrens aus der Palette (B1) betätigt werden.

5. Vorrichtung gemäß Anspruch 3, **dadurch gekennzeichnet dass** sie eine Vielzahl von ersten Transportmitteln (30, 31, 32) senkrecht zu den Stangenmitteln (3) umfasst, deren eines (31) die Tragfläche der Plattform-Mittel (2) ist und deren zwei (30, 32) ausgerichtet zu und angrenzend an entgegengesetzte Enden der ersten Transportmittel (31) der Plattformmittel (2) in dem oberen Zustand dieser Plattform-Mittel (2) sind, um sie mit der Palette (B1) mit der Last (C) zu bestücken und die durch eine Ersatzplattform (B2) getragene Last (C2) abzuräumen.

6. Vorrichtung gemäß Anspruch 4, **dadurch gekennzeichnet dass** die seitlichen Andrückmittel (20) und die jeweiligen Betriebsmittel (21) durch die beweglichen Laufkatzenmittel (11) getragen werden.

7. Vorrichtung gemäß Anspruch 5 und 6, **dadurch gekennzeichnet dass** Abschnitte der ersten Transportmittel (30, 32), welche seitlich und angrenzend zu den ersten Transportmitteln (31) der Plattform-Mittel (2) sind, anhebbar sind, zum Beispiel durch Drehung um einen jeweiligen Bolzen (33) und durch Einwirkung einer jeweiligen Betätigungseinrichtung (34), um den Durchgang des beweglichen Laufkatzenmittels (11) und die Annäherung der seitlichen Andrückmittel (20) an die jeweiligen Seiten der Last (C) zu gestatten.

8. Vorrichtung gemäß Anspruch 5, **dadurch gekennzeichnet dass** sie eine Vielzahl von zweiten Transportmitteln (40, 41) parallel zu den Stangenmitteln (3) umfasst, ausgerichtet zu dem Plattform-Mittel (2) und etwas höher als dieses Plattform-Mittel in dem jeweiligen unteren Zustand, um es mit einer Ersatzpalette (B2) zu bestücken, die zum Tragen der Last (C) verwendet wird, und um die ersetzte Palette (B1) abzuräumen; wobei ein Zwischenabschnitt (41) der zweiten Transportmittel (40, 41), welcher die ersten Transportmittel (31) des Plattform-Mittels (2) durchsetzt, Unterbrechungen für den Durchgang solcher ersten Transportmittel (31) etwas unterhalb von dem Zwischenabschnitt (41) aufweist.

9. Vorrichtung gemäß den Ansprüchen 2 und 8, **dadurch gekennzeichnet dass** die Tragmittel (5) quer zu und höher als in Bezug auf das zweite Transportmittel (40, 41) sind und eine untere Öffnung aufweisen, die geeignet für den Durchgang der Palette (B1) entlang dieser zweiten Transportmittel (40, 41) ist.

10. Vorrichtung gemäß Anspruch 2, **dadurch gekennzeichnet dass** sie eine Vielzahl von Bolzenmitteln (14) aufweist, die dazu verbunden sind, senkrecht über den Tragmitteln (5) zu verfahren und durch jeweilige Betätigungsmittel (15) betätigt werden, um auf reversible Weise jeweilige Sitze (16) in Eingriff zu nehmen, deren jeder in der Nähe der Spitze eines jeweiligen von dem Tragmittel (5) getragenen Stangenmittels (3) vorhanden ist.

## Revendications

1. Dispositif de séparation d'une palette (B1), dont le plan de support est traversé par une pluralité de rainures (S), de la charge respective (C) ; ledit dispositif comprenant au moins :
- un moyen à plate-forme (2) qui, dans un état de fonctionnement du dispositif (1), peut être déplacé verticalement entre un état d'alimentation supérieur de la palette (B1) avec la charge (C) et un état de sortie inférieur ;
- une pluralité de moyens à tiges (3) pourvus de pointes respectives et susceptibles d'être insérés dans les rainures (S) ;
- des moyens de translation (4) adaptés pour assurer une translation relative entre la pluralité de moyens à tiges (3) et la palette (B1) avec la charge (C) ;
dans lequel :
dans l'état de fonctionnement, dans lequel la palette (B1) avec la charge (C) est placée sur le moyen à plate-forme (2) dans l'état d'alimentation supérieur respectif avec la palette (B1) dirigée de sorte que les moyens à tiges (3) soient alignés avec les rainures (S) du plan de support de la même palette (B1), les moyens de translation (4) assurent la translation en rapprochement mutuel de la palette (B1) et des moyens à tiges (3) jusqu' à l'insertion complète de ceux-ci dans les rainures (S) ; le moyen à plate-forme (2) s'abaisse en détachant la palette (B1) de la charge respective (C) qui est supportée par les moyens à tiges (3) ; les moyens de translation (4) comprenant un moyen de fixation (6) pour le support en suspension des extrémités des moyens à tiges (3) opposées aux pointes et un premier moyen d'actionnement pour soumettre à une translation ledit moyen de fixation (6) dans une direction parallèle aux moyens à tiges (3) ; le dispositif (1) comprend par ailleurs un moyen à chariot mobile (11) déplacé par des moyens motorisés respectifs le long de moyens à rails (13) et ayant le moyen de fixation (6) pour les moyens à tiges (3) qui se déplace en se rapprochant et en s'éloignant par rapport au moyen à plate-forme (2), le dispositif (1) étant **caractérisé en ce que** les moyens à rails (13) sont presque parallèles aux moyens à tiges (3).

2. Dispositif selon la revendication 1, **caractérisé en ce que** les moyens à tiges (3), constitués de préférence d'acier AISI 5592 ou d'autres matériaux ayant des limites élastiques similaires, ont des tailles transversales et un positionnement mutuel correspondant à ceux des rainures (S) du plan de support de la palette (B1) elle-même et une longueur au moins légèrement plus grande que celle de ces rainures (S) ; et **en ce que** le dispositif (1) comprend des moyens de support (5) adaptés aux faces inférieures des portions des moyens à tiges (3) proches des pointes et faisant saillie à l'extérieur de la palette (B1), pour les supporter lorsque ceux-ci sont insérés complètement dans les rainures (S).

3. Dispositif selon la revendication 1, **caractérisé en ce que** le moyen à plate-forme (2) a au moins un plan de support pour la palette (B1) avec la charge (C) pourvu d'au moins un guide de translation verticale (8) et d'au moins un actionneur de translation verticale (9) pour sa translation verticale et pourvu de capteurs de position et d'arrêts dissimulés pour le positionnement correct de la palette (B1) avec la charge (C).

4. Dispositif selon la revendication 1, **caractérisé en ce qu'**il comprend des moyens presseurs latéraux (20) presque parallèles aux moyens à tiges (3) placés à côté de ceux-ci (3) et, en état de fonctionnement, presque verticaux ; ces moyens presseurs latéraux (20) étant actionnés de manière à effectuer un mouvement mutuel de rapprochement et d'éloignement par des moyens opérationnels respectifs (21) pour verrouiller la charge (C) au cours de l'abaissement du moyen à plate-forme (2) et de la séparation d'avec la palette (B1).

5. Dispositif selon la revendication 3, **caractérisé en ce qu'**il comprend une pluralité de premiers moyens de transport (30, 31, 32) perpendiculaires aux moyens à tiges (3), dont l'un (31) est le plan de support du moyen à plate-forme (2) et dont deux (30, 32) d'entre eux sont alignés et contigus avec les extrémités opposées des premiers moyens de transport (31) du moyen à plate-forme (2) dans l'état supérieur de ce moyen à plate-forme (2) pour l'acheminer avec la palette (B1) avec la charge (C) et évacuer la charge (C) supportée par une plate-forme de substitution (B2).

6. Dispositif selon la revendication 4, **caractérisé en ce que** les moyens presseurs latéraux (20) et les moyens opérationnels respectifs (21) sont supportés par le moyen à chariot mobile (11).

7. Dispositif selon les revendications 5 et 6, **caractérisé en ce que** des portions des premiers moyens de transport (30, 32) qui sont latérales et contiguës aux premiers moyens de transport (31) du moyen à plate-forme (2) peuvent être soulevées, par exemple, par rotation autour d'une broche respective (33) et par l'effet d'un actionneur respectif (34), pour permettre le passage du moyen à chariot mobile (11) et le rapprochement des moyens presseurs latéraux (20) avec les côtés respectifs de la charge (C).

8. Dispositif selon la revendication 5, **caractérisé en ce qu'**il comprend une pluralité de seconds moyens de transport (40, 41) parallèles aux moyens à tiges (3), dirigés vers le moyen à plate-forme (2) et légèrement plus hauts que ce moyen à plate-forme dans l'état inférieur respectif, pour l'acheminer avec une palette de substitution (B2), utilisée pour supporter la charge (C), et pour évacuer la palette remplacée (B1) ; une portion intermédiaire (41) des seconds moyens de transport (40, 41), qui croise les premiers moyens de transport (31) du moyen à plate-forme (2), ayant des interruptions pour le passage de ces premiers moyens de transport (31) légèrement en dessous de cette portion intermédiaire (41).

9. Dispositif selon les revendications 2 et 8, **caractérisé en ce que** les moyens de support (5) sont transversaux et plus élevés par rapport aux seconds moyens de transport (40, 41) et ont une ouverture inférieure qui convient au passage de la palette (B1) le long de ces seconds moyens de transport (40, 41).

10. Dispositif selon la revendication 2, **caractérisé en ce qu'**il comprend une pluralité de moyens à broches (14) délimités pour subir une translation verticale au-dessus des moyens de support (5) et actionnés par les moyens actionneurs respectifs (15) pour s'engager de manière réversible sur des sièges respectifs (16), chacun obtenu à proximité de la pointe d'un moyen à tige respectif (3) supporté par lesdits moyens de support (5).
